**Europäisches Patentamt**

**European Patent Office**

**Office européen des brevets**

(19)

(11) Veröffentlichungsnummer: **0 045 930**
**A2**

(12) # EUROPÄISCHE PATENTANMELDUNG

(21) Anmeldenummer: 81106082.1

(22) Anmeldetag: 04.08.81

(51) Int. Cl.³: **B 65 F 1/02**
**B 65 D 90/14**

(30) Priorität: 08.08.80 DE 3029982

(43) Veröffentlichungstag der Anmeldung:
17.02.82 Patentblatt 82/7

(84) Benannte Vertragsstaaten:
FR IT NL

(71) Anmelder: Olbrich, Kurt
Gerhart-Hauptmann-Strasse 19
D-6120 Erbach(DE)

(72) Erfinder: Olbrich, Kurt
Gerhart-Hauptmann-Strasse 19
D-6120 Erbach(DE)

(74) Vertreter: Lotterhos, Hans Walter, Dr.-Ing.
Lichtensteinstrasse 3
D-6000 Frankfurt am Main(DE)

(54) **Sammelbehälter, insbesondere für Altglas.**

(57) Die neue Gestaltung der Kopf- (5) und Bodenpartie (7) von Großsammelbehältern mit Bodenklappe (8) besteht in der Absenkung des Transportbügels (1) in einer Mulde (4), einer ringförmigen horizontalen Auflagefläche (13) der im wesentlichen konischen Kopfpartie (5), der Anordnung von bevorzugt drei Standfüßen (9) und einer vergleichsweise kleinen, innen mehr oder weniger hochgewölbten Bodenklappe (8) mit Stützfuß (10) der trichterartig sich verjüngenden Bodenpartie (7). Damit wird erreicht: eine Stapelbarkeit zweier Behälter (I, II) übereinander für den Leertransport infolge der aufeinander abgestimmten Kopf- und Bodenpartie, Gewährleistung der Standfestigkeit eines Behälters auch auf unebenem Untergrund (Dreipunktlagerung) und ein zur Mitte zentrierter nicht über den Behälterrand hinausschießender Fluß des entfallenden Sammelgutes.

Mittels eines in der Behälterschwerachse von der Bodenklappe (8) zum Transportbügel (1) verlaufenden Seiles (17) mit Schlaufe (19) kann der Behälter zur Entleerung bei sicher bewirktem Zuhalten einer angelenkten und nicht arretierten oder eine überhaupt nicht angeschlagenen Bodenklappe (8) an der Schlaufe (19) gehoben werden, bei deren Absenken sich der am Bügel (1) gehaltene Behälter öffnet.

Zur Sicherung einer angelenkten Bodenklappe ist eine beim Schließen der Klappe selbsttätig sich schnappschloßartig verriegelnde Ver- und Entriegelungseinrichtung vorgesehen, die nur bei angehobenem Behälter entriegelt werden kann.

Zur Steigerung des Behälternutzvolumens sind die Standfüße als kreuzgewölbeartig ineinander übergehende Hohlfüße ausgebildet, deren Innenraum Teil des Behältergesamtinnenraums ist; statt einer zentralen, weist der Behälter dann eine Bodenklappe an jedem Hohlfuß auf, die sich zur Zentrierung des entfallenden Sammelgutes zur Behältermitte hin öffnet. Auch diese Behälter sind übereinander stapelbar.

Fig.4

## Sammelbehälter, insbesondere für Altglas

Die Erfindung betrifft Sammelbehälter oder Container, insbesondere solche für die Altglassammlung und bezweckt die Verbesserung der Transport-, Nutzvolumen- und Entleerungseigenschaften der auf diesem Gebiet bekannten Sammelbehälter.

Für die Altglassammlung bislang typische Großsammelbehälter sind in der deutschen Gebrauchsmusterschrift G 77 12 939 und durch das deutsche Geschmacksmuster MR 460 Amtsgericht Michelstadt ausführlich beschrieben und aufgezeigt und bestehen hinsichtlich ihrer äußeren Form im wesentlichen aus einem Standkörper mit kreis- oder ellipsenförmigem Zylinder über einer ebenen Standfläche mit zu verriegelnder Bodenklappe für die Entleerung und laufen oben in Gestalt einer Kugelkappe, eines Teilellipsoids odgl. mit nach oben wegragendem Transportbügel aus. Diese Behälter seien im weiteren Kugelbehälter genannt. Außer diesen sind auch quaderförmige Sammelbehälter bekannt, die durch den Boden, über Kopf oder durch eine Seitenklappe entleert werden. Alle bisher bekannten Sammelbehälter für die Altglassammlung weisen den Nachteil auf, daß sie für den Transport nicht übereinander stapelbar sind; hinsichtlich der Handhabung bei der Entleerung wird zumeist ein der jeweiligen Behälterform und -größe angepaßtes Entladegeschirr benötigt.

Die Entleerung durch den Boden erfolgt durch Oeffnen von Bodenklappen, die Teil des innen ebenen Standbodens sind, wobei der Behälter entweder eine oder zwei Klappen aufweist. Jede Klappe ist einseitig gelenkig angeschlagen und öffnet sich mit Schrägstellung falltürartig.

Bei den Ausführungen mit einer Bodenklappe erstreckt sich diese annähernd über die gesamte Bodenfläche, bei den Ausführungen mit zwei Klappen sind diese jeweils im Bereich der Bodenmitte angelenkt und öffnen sich in entgegengesetzter Richtung zum Behälterrand hin. In allen Fällen ergibt sich damit ein Fluß des über die Schräge der geöffneten Klappe entfallenden Sammelgutes, der weit über den Behälterrand hinausstreut, was die Beladung z.B. eines Lastkraftwagens mit dem Sammelgut erschwert. Die bekannten Behälter liegen entweder mit ihrer gesamten ebenen Bodenfläche auf der Abstellfläche auf oder stehen wie die bisherigen Kugelbehälter auf zwei Auflageleisten. In beiden Fällen steht der Behälter nur auf einer ebenen Abstellfläche standfest; außerdem wirken auf den Behälterboden bzw. auf die Bodenklappe(n) durch Unebenheiten der Abstellfläche bedingte Biegekräfte ein. Nach dem derzeitigen Stand können die Behälter mit Bodenöffnung, das sind diejenigen Behälter, die als öffentliche Glassammelbehälter fast ausschließlich zur Anwendung kommen, entweder nur mit einer speziell angepaßten Vorrichtung gehoben, entriegelt und nach der Entleerung wieder geschlossen und verriegelt oder bei grobem Mißbrauch, z.B. nach dem Umwerfen, auch von Nichtbefugten geöffnet werden.

Aufgabe der Erfindung ist es, Sammelbehälter, insbesondere für die Sammlung von Altglas zu schaffen, die einerseits die geschilderten und weitere im späteren Zusammenhang sich ergebende Nachteile nicht aufweisen und andererseits die Vorteile besitzen, daß sie bei gleicher Stellfläche ein größeres Nutzvolumen haben, kostengünstiger hergestellt und transportiert werden können, auch auf nicht ebenem Gelände abgestellt werden können, ohne auf die Behälterform und -größe angepaßte Spezialvorrichtung gehoben und geöffnet werden können, bei der
Entleerung durch den Boden keinen Streufluß erzeugen,
der über die seitlichen Ausmaße des Behälters hinausstreut, und dessen Bodenklappe sich beim selbsttätigen
Schließen zugleich auch selbst verriegelt, wobei der Verschluß- und Entriegelungsmechanismus wartungsarm und wenig störanfällig ist. Durch ein neues kombiniertes Hebe-
und Zuhalteverfahren können die Behälter auch mit einer
Bodenklappe ausgerüstet sein, die mit dem Behälterboden
nicht fest verbunden ist.

Hinsichtlich der Raumform sind die Behälter gemäß der Erfindung aus einem konventionellen Kugelbehälter mit zylinderförmigem unteren Teil und mit als Kugelkappe ausgebildetem oberen Teil mit Transportbügel, wie in den
Fig. 1a und 1b zkizziert, vgl. auch DE-GM 77 12 939,
entwickelt; dieser Behältertyp ist der für die Altglassammlung bisher gebräuchlichste.

Diesem, wie im übrigen sämtlichen bekannten Sammelbehältern haften die zuvor bereits genannten Nachteile, insbesondere der der Streuung des Sammelgutes beim Entleeren über den Behälterrand hinaus, der mangelnden Standfestigkeit der Behälter bei nicht eingeebnetem Untergrund und der Nichtstapelbarkeit einer Mehrheit von Behältern übereinander, letzteres besonders wegen des
überstehenden Transportbügels bedingt, an. Ferner weisen
auch sämtliche bekannten Behälter wegen der Gestaltung
ihrer Kopfpartie ein ungünstiges Verhältnis von Nutz- zu
Leervolumen des Behälters auf; wegen der Lage der Einwurföffnungen ist das Nutzvolumen stets geringer als das
Leervolumen, denn oberhalb der Einwurföffnungen verbleibt ein für die Aufnahme von Sammelgut nicht nutzbarer Raum.

Diese aufgezeigten Nachteile beseitigt die Erfindung
durch die Realisierung folgender Ueberlegungen:

- den Totraum oberhalb der Einwurföffnungen zur Aufnahme des Transportbügels zu nutzen, indem der Anteil der Kopfpartie des Behälters, der den Transportbügel trägt, nach innen gewölbt ist und der Transportbügel die Behälterkammer nicht überragt,
- bei Behältern mit kugelkappenförmiger Kopfpartie die Randzone um die Einwölbung ringförmig horizontal zu gestalten und so eine Abstellfläche für einen oberen Behälter zu schaffen,
- den unteren Bereich des Behälters vergleichsweise stark konisch zu gestalten, die Bodenklappe vergleichsweise klein zu halten und obendrein mit einer Emporwölbung ihrer inneren Bodenfläche auszuformen, so daß das Sammelgut zur Mittelachse des Behälters hin gut zentriert ausläuft und Fahrzeuge auch am Rand der Lafläche befüllt werden können, ohne daß dabei Glasscherben über den Fahrzeugrand hinausströmen,
- und den Behälter mit vorzugsweise drei Standfüßen in maximalem Abstand zueinander zu versehen, die dem Behälter auch auf nicht ebenem Gelände stets Standfestigkeit und Kippsicherheit verleihen  und für die Stapelbarkeit die Kopfpartie eines unteren Behälters sitzfest übergreifen.

Die Kopfpartie der neuen Behälter mag aus Gründen der Herstellung statt kugelförmig auch konisch gestaltet sein. Statt eines runden Querschnitts der Mittelpartie des Behälters mit senkrechten Wänden kann ein quadratischer oder nahezu quadratischer Querschnitt mit leicht nach außen gebogenen Seitenlinien und abgerundeten Ecken gewählt werden; die Kopfpartie kann dann statt zu einem Konus auch mit vier schräg nach oben einander zugeneigten Seitenwänden gebildet sein, entsprechend auch die Bodenpartie. Weitere funktionelle Gestaltungen sind möglich; auch können vier statt dreier Behälterfüße vorgesehen sein.

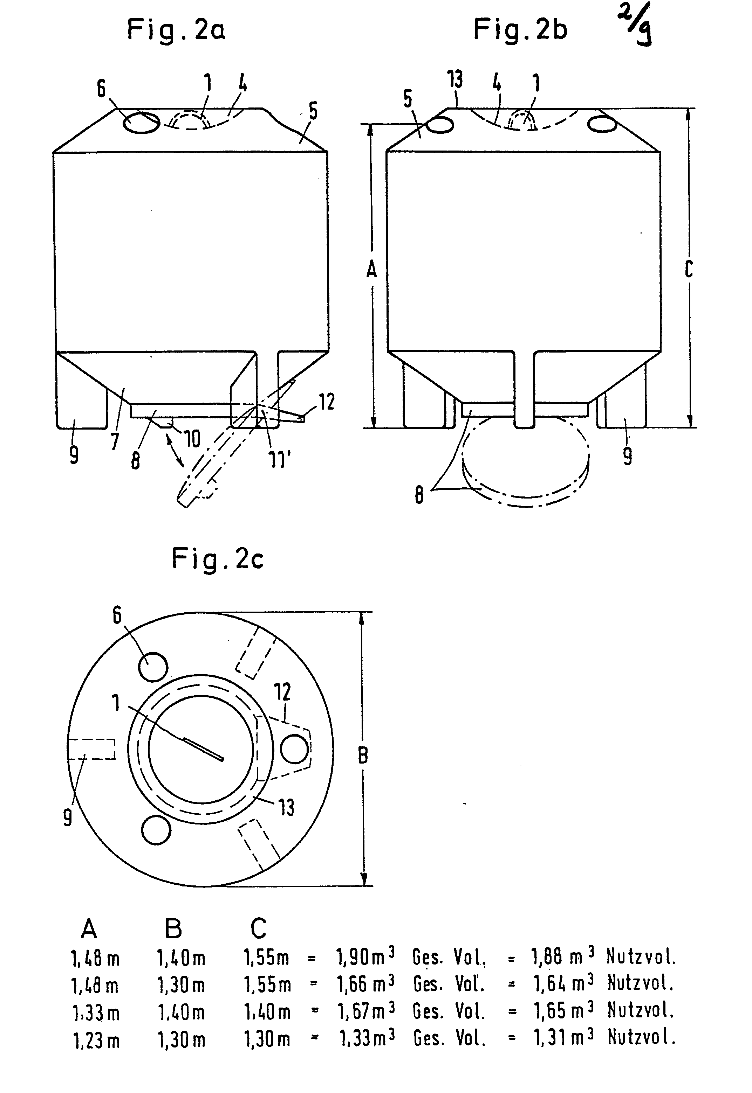

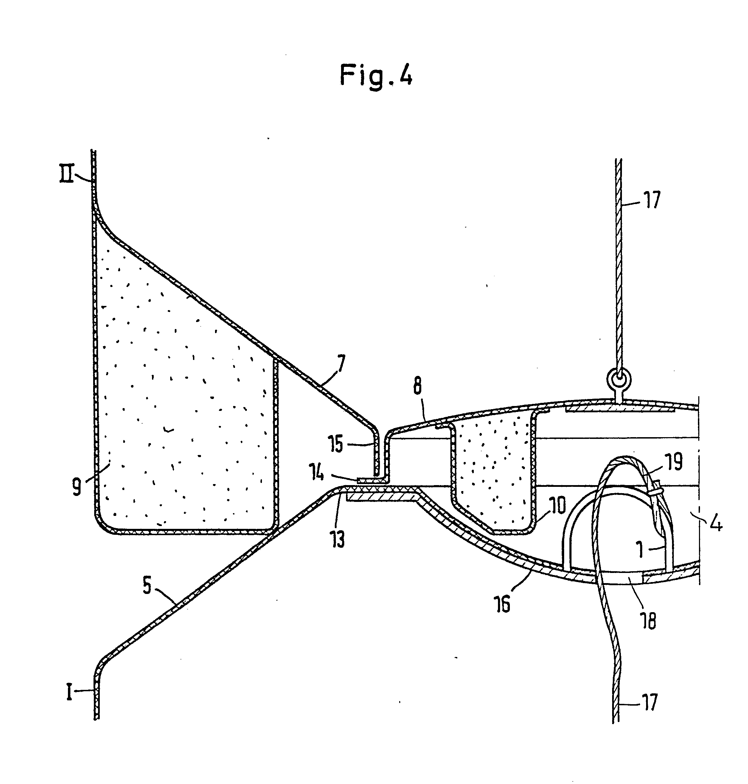

Die runde und die im wesentlichen quadratische Grundform der neuen Sammelbehälter mit versenktem Transportbügel sind in den Fig. 2a bis 3c skizziert. Diese Behälter lassen sich stand- und rutschfest aufeinanderstellen, wie Fig. 4 grundsätzlich entnommen werden kann. Eine konische Ausgestaltung der Kopfpartie begünstigt die Stapelbarkeit der Behälter.

Die Körper der Sammelbehälter gemäß der Erfindung können aus Metall, insbesondere aber aus glasfaserverstärktem Kunstharz gefertigt sein und sind, auch wegen der konischen Bauweise im Boden- und Kopfbereich und wegen der gewölbten Seitenflächen, statisch sehr stabil und dünnwandig und leicht zu fertigen. Die den Transportbügel tragende Einwölbung am Kopf des Behälters erhöht gleichfalls die statische Belastbarkeit der Behälter und begünstigt damit eine leichtere Bauweise. Eine weitere Material und Gewichtsersparnis bedeutet die wegen des konischen Auslaufs des Behälters kleinere Bodenklappe, die im Vergleich zu einer sich gemäß dem Stande der Technik nahezu über die gesamte Grundfläche des Behälters erstreckenden Klappe gleichfalls dünnerwandig ausgelegt sein kann; bei Emporwölbung nach innen, wie bei den Bodenklappen der bisherigen Behälter nicht vorgesehen, kann die Klappe in noch geringerer Materialstärke gefertigt sein und ist damit auch unter geringerem Kraftaufwand bewegbar.

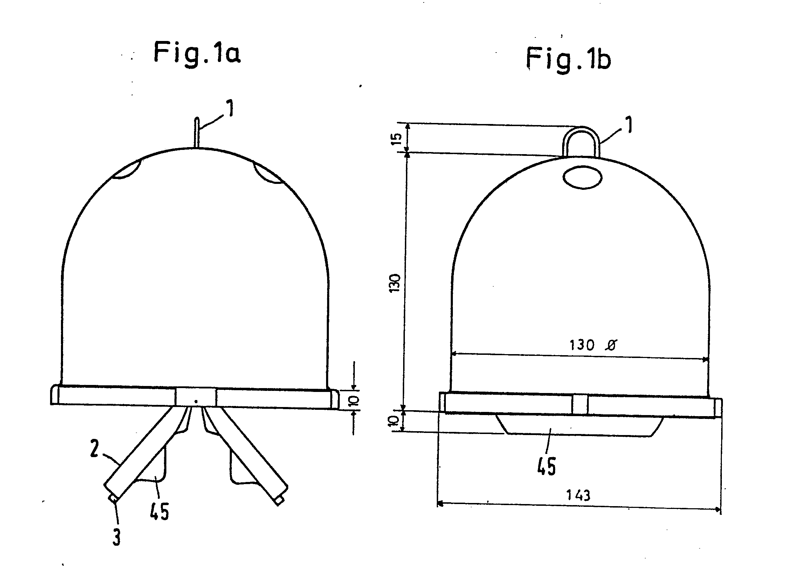

Im Vergleich zu dem eingangs und in den Fig. 1a und 1b vorgestellten konventionellen Kugelbehälter ergibt sich für die Behälter gemäß der Erfindung trotz versenkten Transportbügels und konischen Auslaufs der Bodenpartie bei geringerer Gesamthöhe und gleicher Stellfläche ein wesentlich höheres Nutzvolumen.
Zur Dokumentation sind in den Fig. 1a und 1b (Stand der Technik) und 2a bis 3c (Behälter gemäß der Erfindung) Maße und Berechnungsergebnisse hinsichtlich der Gesamt- bzw. Leer- und der Nutzvolumina angegeben. Bezogen auf dieselbe Gesamthöhe über alles von 1,55 m und eine

0045930

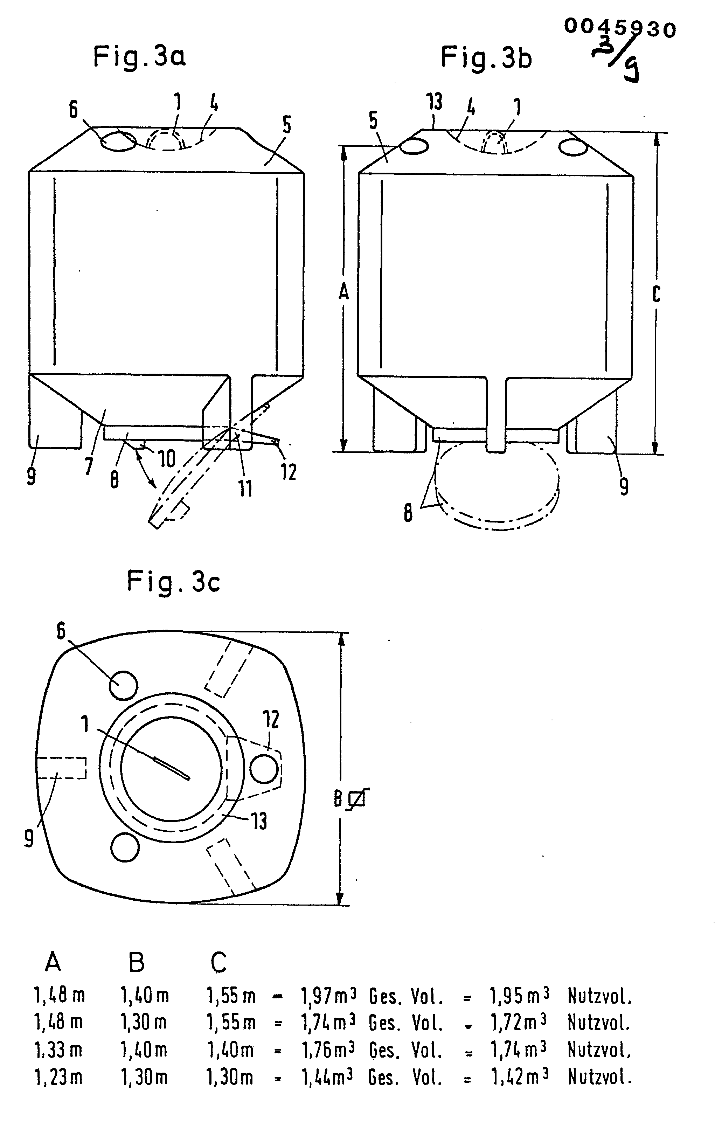

Stellfläche von 1,43 m x 1,43 m für den konventionellen Behälter und von 1,40 m x 1,40 m für die neuen Behälter, ergibt sich für den konventionellen Behälter ein Nutzvolumen von 100 %, für den neuen Behälter in runder Ausführung (Fig. 2c) ein Nutzvolumen von 149 % und für die quadratische leicht gewölbte Ausführung (Fig. 3c) ein Nutzvolumen von 155 %. Will man die Nutzvolumina konstant halten, können die neuen Behälter im Vergleich zum konventionellen Kugelbehälter in deutlich kleineren Grundabmessungen ausgeführt werden. Bei einem Nutzvolumen von etwa 1,3 m$^3$ für den konventionellen Kugelbehälter benötigt dieser eine Gesamthöhe von 1,55 m und eine quadratische Stellfläche von 1,43 m Seitenlänge; für ein Nutzvolumen von 1,3 - 1,4 m$^3$ benötigen die neuen Behälter jedoch nur eine Höhe von 1,30 m und eine quadratische Stellfläche von nur 1,30 m Seitenlänge.

Ein wichtiger Kostenfaktor sind die Kosten für den Transport der Sammelbehälter vom Herstellungs- zum Aufstellungsort, die nicht unerheblich sind; aus Wirtschaftlichkeitsgründen ist nur ein begrenzter Auslieferungsradius angemessen. Die praktisch verwendeten konventionellen Kugelbehälter benötigen eine Stellfläche von 1,43 m im Quadrat, haben eine Gesamthöhe einschließlich Transportbügel von 1,55 m und können nicht übereinandergestapelt werden. Die im vorigen beschriebenen Behälter gemäß der Erfindung benötigen - bei vergleichbarem Nutzvolumen - nur eine Gesamthöhe von 1,30 m und eine Stellfläche von 1,30 m im Quadrat; außerdem können sie übereinandergestellt werden; zufolge des Eindringens der Kopfpartie des unteren in die Bodenpartie des oberen Behälters werden beim Uebereinanderstellen zweier Behälter, vgl. Fig. 3 bzw. Fig. 4, nochmals gut 5 cm Höhe eigespart, so daß sich die Gesamtladehöhe für zwei Behälterlagen auf insgesamt nur 2,55 m beläuft. Auf einem Lastkraftwagen mit der typischen Ladefläche von 5,30 m Länge und 2,65 m Breite können nur 5 Stück der wie oben bemessenen konventionellen Behälter, und zwar in Zickzackanordnung transportiert werden, während von den Behältern in der Bauart gemäß der Erfindung und vergleichbaren Nutzvolumens jedoch, und zwar paarweise in einer unteren Lage 4 x 2 und bei zweilagiger Anordnung somit 16 Stück befördert werden können. Die Transportkosten je Behälter lassen sich folglich auf etwa 30 % senken und sind in Anbetracht des auch etwas größeren relativen Nutzvolumens der Behälter je Nutzvolumeneinheit noch preisgünstiger.

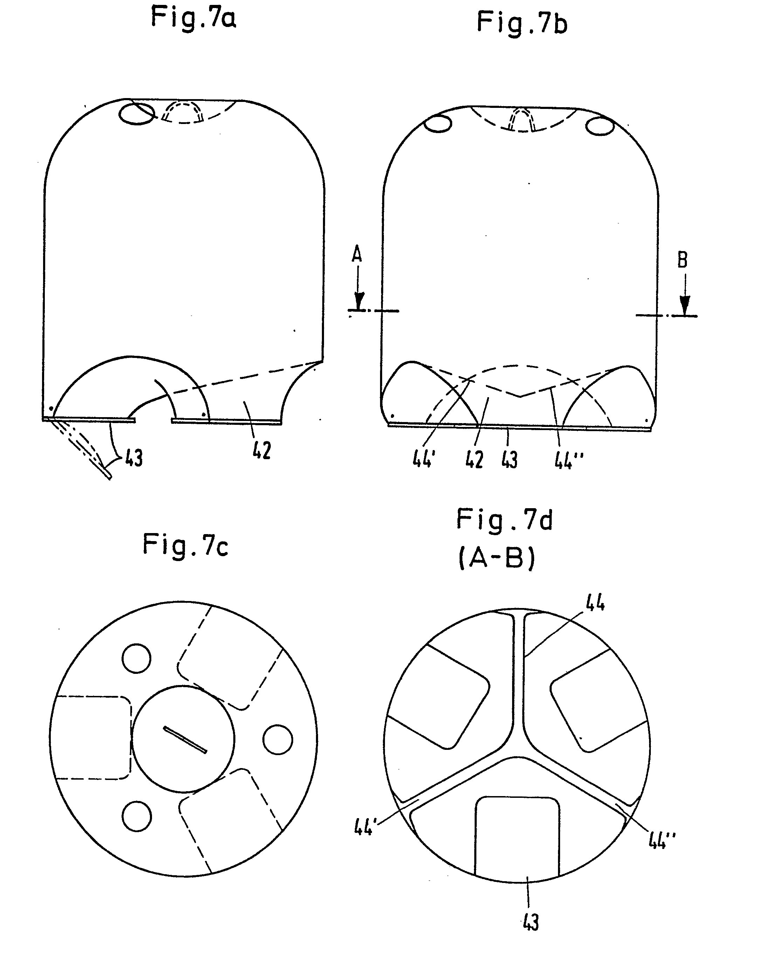

In einer Weiterbildung des Raumform- und Nutzvolumengedankens sind die Behälterfüße hohl gestaltet, wobei deren Innenraum Teil des befüllbaren Nutzraumes ist, vgl. Fig. 7a und 7b. Das Sammelgut wird statt über eine im Zentrum des Behältergrundrisses gelegene Entnahmeöffnung nun durch die Füße entleert. Dies erfordert bei drei Standfüßen des Behälters zwar drei Bodenklappen, vgl. Fig.7c und 7d, das Nutzvolumen eines solchen Behälters läßt sich jedoch bei den Vergleichsabmessungen von 1,30 m Gesamthöhe und 1,30 m im Quadrat für die Stellfläche bei einem Gesamt- bzw. Leervolumen von 1,42 m$^3$ nunmehr auf etwa 1,40 m$^3$ erhöhen. Da Sammelbehälter dieses Typs gleichfalls übereinandergestellt werden können, lassen sich die Transportkosten je Nutzvolumeneinheit weiter senken. Dieser Hohlfußbehälter ist zu den Fig. 7a bis 7d näher beschrieben.

Der folgende Abschnitt befaßt sich mit der Verbesserung der Hebetechnik und Sicherung der Bodenklappe. Nach dem Stande der Technik, vgl. DE-GM 79 16 034, ist ein Behälter bekannt, der einen hochstehenden oben zentral angeordneten Transportbügel und eine um eine Schwenkachse bewegliche Bodenklappe aufweist; die Bodenklappe ist unverriegelt und besitzt auch kein Schloß. Zum Zuhalten der Bodenklappe beim Anheben des Behälters am Transportbügel dient ein Stahlseil, das an der Bodenklappe angeschlossen ist, die Behälterdecke in einem Durchlaß in seitlicher Entfernung vom Transportbügel durchläuft und in einer Oese bzw. Schlaufe lose endet.

Für das Zuhalten der Bodenklappe beim Emporheben des Behälters am Transportbügel muß das Seil mittels eines separaten zweiten Hebezeuges, das in der Seilöse eingehängt ist, straff gehalten werden. Dabei besteht die Gefahr, daß bei zu schwachem Zug an diesem Zuhalteseil die Bodenklappe sich vorzeitig ungewollt öffnet und daß bei zu starkem Zug sich der Behälter verkantet und in Schaukelbewegung gerät.

Gemäß der Erfindung dient zum Heben des Behälters unter synchron sicher bewirktem Zuhalten der Bodenklappe ein Stahlseil, das mit seinem einen Ende gleichfalls an der Bodenklappe, mit seinem anderen Ende jedoch am Transportbügel angeschlossen ist; dabei ist das Seil direkt unterhalb des Transportbügels, d.h. zentral durch die Behälterdecke geführt und bildet direkt oberhalb des Transportbügels, d.h. wiederum zentral eine Schlaufe aus bzw. kann eine solche ausbilden, vgl. Fig. 4, in welcher der Haken eines Hebezeuges eingehängt werden kann. Beim Anheben des Behälters an der Seilschlaufe wird die Bodenklappe stets fest und ohne weiteres gegen den Rand der Bodenöffnung gepreßt, so daß der Behälter auch ohne Verriegelung der Bodenklappe und ohne zweites Hebezeug verschlossen bleibt. Zu Fig. 4 wird das Heben, Entleeren, Schließen und Abstellen des Behälters näher beschrieben.

Für ein Anheben der Behälter unmittelbar am Transportbügel muß die Bodenklappe verriegelt sein. Nach dem Stande der Technik dienen dazu Bügelverschlüsse, die gegebenenfalls nur mittels einer speziellen Einrichtung am Hebefahrzeug gelöst werden können.
Zur Minderung des Bedienungs- und Gesamtherstellungs- bzw. Einrichtungsaufwandes kommen gemäß der Erfindung jetzt nach dem Schnappschloßprinzip selbsteinrastende Riegel zur Anwendung, die zum Oeffnen der Bodenklappe mittels einer Hilfseinrichtung, z.B. eines Bedienungsseiles, aus ihrer Verschlußlage herausgezogen oder herausgedreht werden können.

Die Sammelbehälter gemäß der Erfindung und deren Ausrüstungsvarianten sind anhand figürlicher Darstellungen ausgewählter Ausführungsbeispiele mit weiteren Merkmalen nachstehend näher erläutert.

Es zeigen:

Fig. 1a und 1b     die Seiten- und die Vorderansicht eines Behälters nach dem Stande der Technik unter Angabe der gebrauchsüblichen Abmessungen (in cm);

Fig. 2a bis 2c     die Seitenansicht, die Vorderansicht und die Draufsicht auf einen neuen Behälter in runder Ausführung des Behälterkörpers;

Fig. 3a bis 3c     die Seitenansicht, die Vorderansicht und die Draufsicht auf einen neuen Behälter in im wesentlichen quadratischer Ausführung des Behälterkörpers;

Fig. 4     den Mittenlängsschnitt durch zwei aufeinandergestellte neue Behälter mit unverriegelter Bodenklappe in einer Teilschnittzeichnung;

Fig. 5a     den Mittenlängsschnitt durch zwei aufeinandergestellte neue Behälter mit verriegelbarer Bodenklappe in einer Teilschnittzeichnung und

Fig. 5b     die Schnittansicht für die Ver- und Entriegelungseinrichtung nach Linie A-B in Fig. 5a;

Fig. 6a     die Schnittansicht auf eine weitere Ver- und Entriegelungseinrichtung, und zwar nach Linie B-C in Fig. 6b, wobei

Fig. 6b     die Schnittunteransicht zeigt;

Fig. 7a und 7b     die Seitenansicht und Vorderansicht eines Rundbehälters mit Hohlfüßen;

Fig. 7c     die Draufsicht zu Fig. 7a und

Fig. 7d     den Querschnitt zu Fig. 7b nach Linie A-B; .

Fig. 8 zeigt in Teilansichten A bis E unterschiedliche Lösungen für die Kopfpartie und in Teilansichten F bis L unterschiedliche Lösungen für die Bodenpartie von Sammelbehältern;

Fig. 9 dient zur Erläuterung von Tab. 2.

Die Fig. 1a und 1b zeigen einen konventionellen Kugelbehälter mit überstehendem Transportbügel 1, zwei Bodenklappen 2, die sich jeweils so nach außen öffnen, daß das Schüttgut über die Peripherie des Behälters hinausgetragen wird. In geschlossenem Zustand, wobei der Bügelverschluß für die Verriegelung der Zapfen 3 nicht gezeigt ist, bilden die Klappen zugleich den Behälterboden, der wegen der beiden Auflageleisten 45 für eine gute Standfestigkeit des Behälters eine ebene Standfläche erfordert. Zwei derartige Behälter können nicht übereinandergestellt werden.

Die Fig. 2a bis 3c zeigen zwei Ausführungsformen der neuen Behälter mit in einer Mulde 4 versenktem Transportbügel 1, konischer Kopfpartie 5 mit drei Einwurföffnungen 6 und mit konischer Bodenpartie 7 mit zentraler innen emporgewölbter Bodenklappe 8 und mit drei Stützfüßen 9. In geschlossenem Zustand kann die Klappe 8 mit einem Stützfuß 10 auf der Abstellfläche aufliegen. Die Fig. 2a, 2b, 3a und 3b zeigen den Behälter sowohl geschlossen als auch geöffnet, letzteres in strichpunktierter Darstellung. Die Klappen 8 sind im Bereich 11' mit einem Scharnier angelenkt und können zur Oeffnungsbegrenzung einen Anschlag 12 tragen. Die angesetzten Füße 9 und 10 können zur Gewichtserleichterung hohl sein. Die Dreipunktlagerung verleiht den Behältern auch auf nicht eingeebnetem Untergrund stets festen und sicheren Stand; es können jedoch auch vier Standfüße 9 angeordnet sein. Zur bequemen Zugänglichkeit sind drei Einwurföffnungen 6 vorgesehen, von denen auch bei Aneinanderreihung mehrerer Behälter oder beim Aufstellen der Behälter an einer Wand oder in einer Ecke stets ein bis zwei Oeffnungen zugänglich sind; der Zugänglichkeit dient auch die gegenüber den Füßen 9 versetzte Anordnung der Einwurföffnungen, vgl. Fig. 2c und 3c.

Aus statischen Gründen ist der Transportbügel so anzuordnen, daß seine Ansatzpunkte in maximalem Abstand zu den Einwurföffnungen stehen.

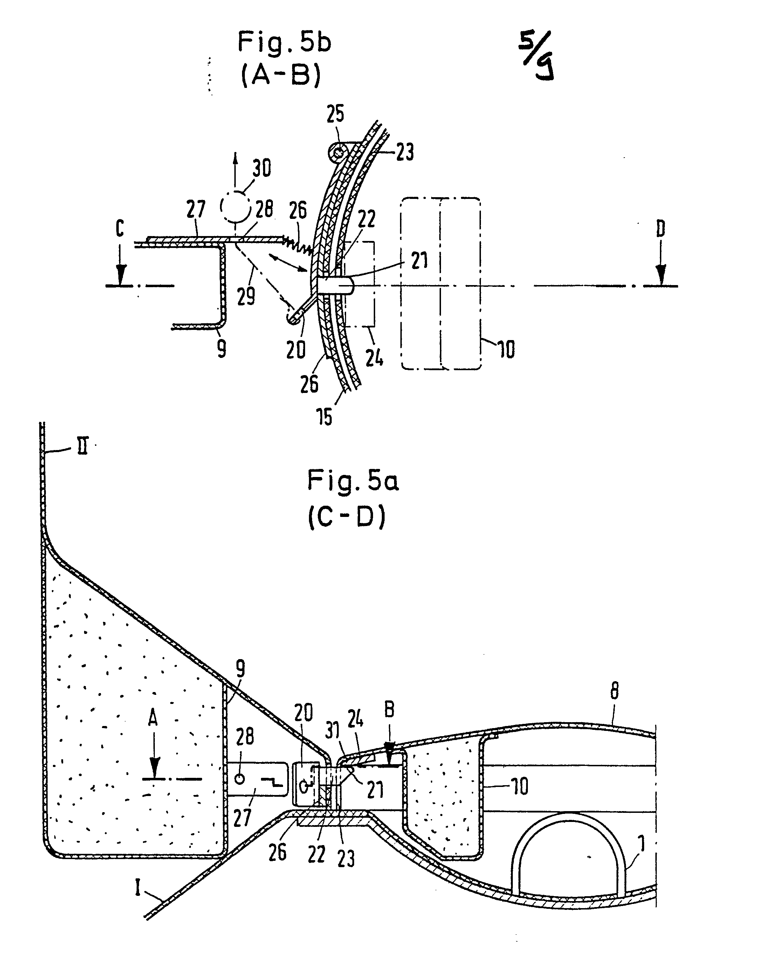

Zwischen dem abfallenden Bereich der konischen Kopfpartie 5 und der Mulde 4 ist eine ebene Ringfläche 13 als Standfläche für einen oberen Behälter ausgebildet. Die Füße 9 und 10, die Oeffnung am Behälterboden sowie die Bodenklappe 8 sind so ausgebildet, daß beim Aufeinanderstellen der obere Behälter fest und ausreichend fixiert steht und eine Verteilung der Lasten eintritt, die Beschädigungen an den Behältern vermeidet. Die Anordnung zweier übereinandergesetzter Behälter I und II ist in den Fig. 4 und 5a illustriert.

Die Fig. 4 zeigt zunächst zwei übereinandergestellte Behälter I und II, wobei die Bodenklappe 8 des Behälters II unverriegelt ist. Diese Klappe kann entweder am Behälterboden (in dem nicht dargestellten rechten Gebiet) schwenkbar angeschlagen oder an diesem überhaupt nicht befestigt sein. Im letzten Fall benötigt die Bodenklappe dann mehrere Stützfüße 10, um bei abgestelltem Behälter mit ihrem Randring 14 fest an dem rohrförmigen Auslaß 15 des konischen Bodenteils 7 anzuliegen.

Bei Ausführung des Behälters in Kunststoff-, z.B. GFK-Bauweise ist der stählerne Transportbügel 1 mit einem der Mulde 4 und der Ringfläche 13 hinterlegten Stahlband 16 als Verstärkung verbunden.

Das Figurenteil I über das Figurenteil II gesetzt ergibt die Darstellung eines nahezu vollständigen Behälters, dessen Bodenklappe und Transportbügel mit den Enden eines Seils, z.B. eines Stahlseils verbunden sind. Das Seil 17 ist an der Bodenklappe an einem Befestigungsring mit hinterlegter Stahlscheibe befestigt, durch einen Durchlaß 18 durch die Behälterdecke geführt und bildet eine Schlaufe 19 über dem Schwerpunkt des Behälters.

Beim Anheben des Behälters an der Schlaufe 19 ist die Boden-oder Verschlußklappe 8 fest an den Auslaß 15 gepreßt, so daß kein Sammelgut entfallen kann. Zur Entleerung des gehobenen Behälters wird die Klappe 8 dadurch geöffnet, daß der Transportbügel 1 von einem zweiten Haken unterfaßt und in der Schwebe gehalten und der in der Schlaufe 19 eingehängte Haken abgelassen wird, wodurch sich die Bodenklappe gleichfalls absenkt und die Auslaßöffnung freigibt, durch die das Sammelgut zur Behälterachse hin zentriert herausfällt. Die Zentrierung dieses Schüttgutes wird bei vergleichsweise kleiner Bodenklappe, deren Durchmesser auch kleiner als der Halbmesser des Behälterkörpers sein kann, besonders gefördert und weiterhin durch eine mehr oder weniger hochgezogene Auswölbung des Bodenklappeninnenbodens begünstigt. Eine kleine Bodenklappe ist jedoch nur brauchbar, wenn abseits der Bodenöffnung gelegene Mengen an Sammelgut die Oeffnung leicht verlassen können. Dies wird durch die Verjüngung der Bodenpartie erzielt. Zwar sind nach dem Stande der Technik, vgl. DE-GM 79 16 034, Behälter mit sich verjüngender Bodenpartie grundsätzlich bekannt, doch weisen diese Behälter keine Standfüße auf, so daß die Behälter mit der Bodenklappe als Auflage aufsitzen müssen. Eine weitere Verkleinerung der Bodenklappe ist für die herkömmlichen Behälter aber nicht möglich, ohne die Standfestigkeit und Kippsicherheit der Behälter gefährlich zu beeinträchtigen.

In der umgekehrten Reihenfolge der Bedienungsschritte für das Heben und Oeffnen kann der Behälter dann wieder geschlossen und auf seinen Standplatz zurückgesetzt werden. Bauart und Entleerungstechnik für diesen Behälter haben den Vorteil, daß ein Ver- und Entriegelungssystem entfallen und die Bedienung dennoch von einer Arbeitskraft ausgeführt werden kann. Es ist auch möglich, den Entleerungsvorgang durch Schließen der Bodenklappe zu unterbrechen, um beispielsweise einen zu hohen Schüttberg zu vermeiden oder um eine schrittweise Befüllung der Ladefläche an der Bordwand des Entsorgungsfahrzeuges zu besorgen, - und zwar ohne unkontrollierte Schaukelbewegungen des Behälters.

Steht nur ein Kranhaken zur Verfügung, wird der Behälter zunächst an der Schlaufe 19 gehoben und auf der Ladefläche des Entsorgungsfahrzeuges abgesetzt. Nach Umhängen des Hakens auf den Transportbügel 1 wird der Behälter dann wieder angehoben, wobei sich die Klappe 8 öffnet und beim anschließenden Zurückstellen des Behälters auf den Standplatz wieder schließt. Für das selbsttätige Schließen der Klappe ist es günstig, wenn diese angelenkt und zugleich mit einem Anschlag 12 versehen ist, der eine maximale Schrägstellung einstellt und verhindert, daß die Bodenklappe annähernd senkrecht herunterhängen kann.

Die Fig. 5a bis 6b zeigen selbsttätige Verriegelungseinrichtungen. Die Behälter können nach der Kopf-Boden-Technik, d.h. an der Schlaufe 19, oder nur am Kopf, d.h. am Transportbügel 1, gehoben werden, wobei im ersten Falle der Behälter leichter gebaut sein kann als im zweiten.

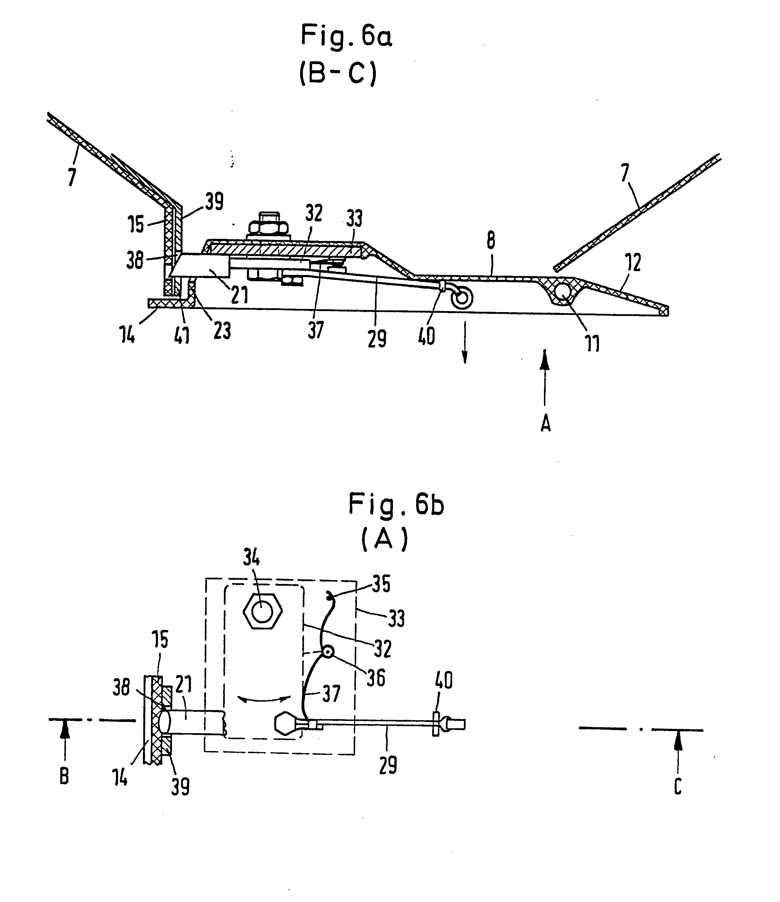

Fig. 5a zeigt wie Fig. 4 zunächst zwei übereinandergestellte Behälter I und II, wobei die Bodenklappe 8 des Behälters II selbsttätig verriegelbar ist; die Bodenklappe sei der Verriegelungseinrichtung gegenüberliegend angelenkt, etwa wie in Fig. 6a angedeutet.

Fig. 5b zeigt die Ver- und Entriegelungseinrichtung ausführlicher.

Die Verriegelung erfolgt hier durch einen behälterseitigen an einer beweglichen Druckplatte 20 angeordneten Stahlbolzen 21 mit schräger Gleitfläche, der in eine Aussparung 22 in dem senkrechten Kragen 23 der Bodenklappe 8 vorstößt. Die Aussparung 22 ist schlitzförmig und kann in U-Form nach unten offen sein. In geschlossenem Zustand kann die Bodenklappe an einer Verstärkungsplatte 24, z.B. einer Eisenplatte, auf dem Bolzen aufliegen oder je nach Unebenheit der Abstellfläche auch leicht angehoben sein. Die Druckplatte 20 ist über ein Gelenk 25 an einer Halteplatte 26 angeordnet, die ihrerseits mit dem rohrförmigen Auslaß 15 des Behälters fest verbunden ist, und wird durch eine von zwei Zapfen gehaltenen Spiralfeder 26 angedrückt. Das Gegenende der Feder 26 wird von einem Haltestück 27 getragen, welches von einem Standfuß 9 abragt. Durch den Durchlaß 28 in dem Haltestück 27 ist ein Zugseil 29 mit Ring 30 geführt und an der Druckplatte 20 befestigt.

Zur Entleerung wird der Behälter, der kein Seil 17 aufweisen muß und sofern er kein solches aufweist, am Transportbügel 1 zunächst angehoben, dann wird am Ring 30 ein Bedienungsseil, gegebenenfalls auch eine Bedienungsstange befestigt und der Behälter über die Ladefläche des Entsorgungsfahrzeuges gehoben. Durch Zug am Bedienungsseil wird der Bolzen 21 zurückgezogen, und die Klappe 8 geht nach unten weg. Der Bolzen 21 kann dann wieder in seine Grundstellung vorgelassen werden. Das Verriegeln der Bodenklappe erfolgt selbsttätig beim kurzen Aufsetzen des Behälters auf der Bordwand um die Ladefläche oder beim Zurückstellen des Behälters, indem die Klappenkante 31 von unten gegen die Gleitfläche des Bolzens 21 stößt und diesen zurückdrückt, bis er in die Aussparung 22 einrasten kann. Vorteil dieses Ver- und Entriegelungssystems ist, daß der Behälter nur im angehobenen Zustand entriegelt werden kann, die Verriegelung selbsttätig erfolgt und die Ver- und Entriegelungsmechanik wartungsfrei und nicht störanfällig ist.

In den Fig. 6a und 6b ist eine weitere Ver- und Entriegelungseinrichtung gezeigt, bei der die Verriegelung durch einen bodenklappenseitigen an einer unterseitigen Drehplatte 32 horizontal schwenkbaren, schräg angeschnittenen Bolzen 21, der den Kragen 23 der Bodenklappe 8 durchsetzt, bewirkt wird. Die Drehplatte 32 ist an einer mit der Bodenklappe 8 fest verbundenen außenliegenden Grundplatte 33 gelagert. Der Drehpunkt 34 der Drehplatte 32 liegt an deren dem Bolzen 21 entfernten Ende, so daß die Drehplatte als Hebel wirken kann. Eine mittels zweier Zapfen 35, 36 an der Grundplatte 33 gehaltene Schlingenfeder, eine Bandfeder, 37 hält die Druckplatte 32 in Verschlußlage, in der der Bolzen 21 in eine Aussparung, z.B. Bohrung, 38 in einem Verstärkungseisen, z. B. ein Stahlband, 39 eingreift, das innenseits der Behälterwand an deren Teilen 7 und 15 fest angeordnet ist. Zur Entriegelung wird die Drehplatte 32 über ein ihrem Drehpunkt 34 fern angeordnetes Zugseil 29, das in einer Oese 40 an der Klappe 8 geführt ist, ausgeschwenkt; der Bolzen 21 verläßt daraufhin die Aussparung 38, und die Bodenklappe kann sich nach unten öffnen. Durch die Lage des Zapfens 36 oder eines weiteren Zapfens wird die Ausrückstrecke des Bolzens 21 begrenzt. Das Heben, Oeffnen und Schließen erfolgt wie zu Fig. 5a und 5b beschrieben, wobei hier der Bolzen 21 von der Kante 41 des Behälterauslasses 15 ausgelenkt wird und nach Aufsetzen der Kante 41 auf dem als Anschlag wirkenden Randring 14 der Bodenklappe 8 zufolge der Kraft der Feder 37 wieder in die Verriegelungslage vorrückt. Auch diese Ver- und Entriegelungseinrichtung ist sehr einfach und wartungsfrei und besonders störunanfällig, da der Bolzen 21 auf der Grundplatte 33 offen geführt ist und sich durch Schmutz oder Rost nicht festsetzen kann. Auch hier ist ein Oeffnen der Bodenklappe nur nach dem Anheben des Behälters möglich.

Mit den beschriebenen Ver- und Entriegelungseinrichtungen lassen sich auch Behälter mit zwei oder drei Bodenklappen ausrüsten, wobei die Klappen synchron oder unabhängig voneinander aufeinanderfolgend geöffnet werden können. Ein Behälter mit drei Bodenklappe ist in den Fig. 7a bis 7d vorgestellt.

Bei den Fig. 7a bis 7d handelt es sich um einen Sammelbehälter, bei dem die Aufgabe der Erfindung hinsichtlich Erhöhung der Standfestigkeit, des relativen Nutzvolumens und der Entleerungseigenschaften des Behälters dadurch gelöst ist, daß der Behälter drei Standfüße 42 aufweist, die hohl sind und deren Hohlraum Teil des Nutzraumes des Behälters ist, wobei das Verhältnis von Nutz- zu Leervolumen gegenüber den vorigen Bauausführungen günstiger liegt. Die Zentrierung des entfallenden Sammelgutes wird durch je eine Bodenklappe 43 in jedem Standfuß 42, die sich gegen die Behälterachse hin öffnet, erzielt, indem das Sammelgut beim Herausströmen zwangsläufig zur Mitte hingelenkt wird. Der Behälter kann in seinem Mittelteil anstatt - wie dargestellt - rund auch im wesentlichen quadratisch sein oder eine andere Zweckform haben; auch kann er vier Hohlfüße aufweisen. Desgleichen kann die Kopfpartie in den eingangs beschriebenen Formvarianten ausgestaltet sein. Die Bodenpartie des Behälters ist so ausgebildet, daß der Behälterboden kreuzgewölbeartige Flanken aufweist, von denen jeweils zwei benachbarte in Verbindung mit der Außenwand den Innenraum eines Hohlfußes bilden und zugleich dessen Höhe begrenzen. Zwei Nachbarflanken zweier Füße gehen nach oben in einen von der Wand des Behälters zu dessen Mitte hin abfallenden Grat 44 über. Die insgesamt drei Grate bilden einen dreistrahligen Stern (Fig. 7d). Bei einer Ausführung mit vier Füßen erhielte man einen vierstrahligen Stern. Das Oeffnen, Schließen und Ver- und Entriegeln der Bodenklappen kann wie zu den Fig. 4 bis 6b beschrieben erfolgen.

In einer besonderen Ausgestaltungsform für die Behälter mit Hohlfüßen können die Grate 44 nach oben als Schottwände fortgeführt sein. Es sind dann Behälter mit getrennten Kammern geschaffen, die einzeln geöffnet werden können. Damit ist es möglich, innerhalb des Behälters nach Sorten, z.B. nach Gläsern unterschiedlicher Farbe zu sortieren, diese getrennt zu entnehmen und in getrennte Abteilungen des Entsorgungsfahrzeugs zu verteilen.

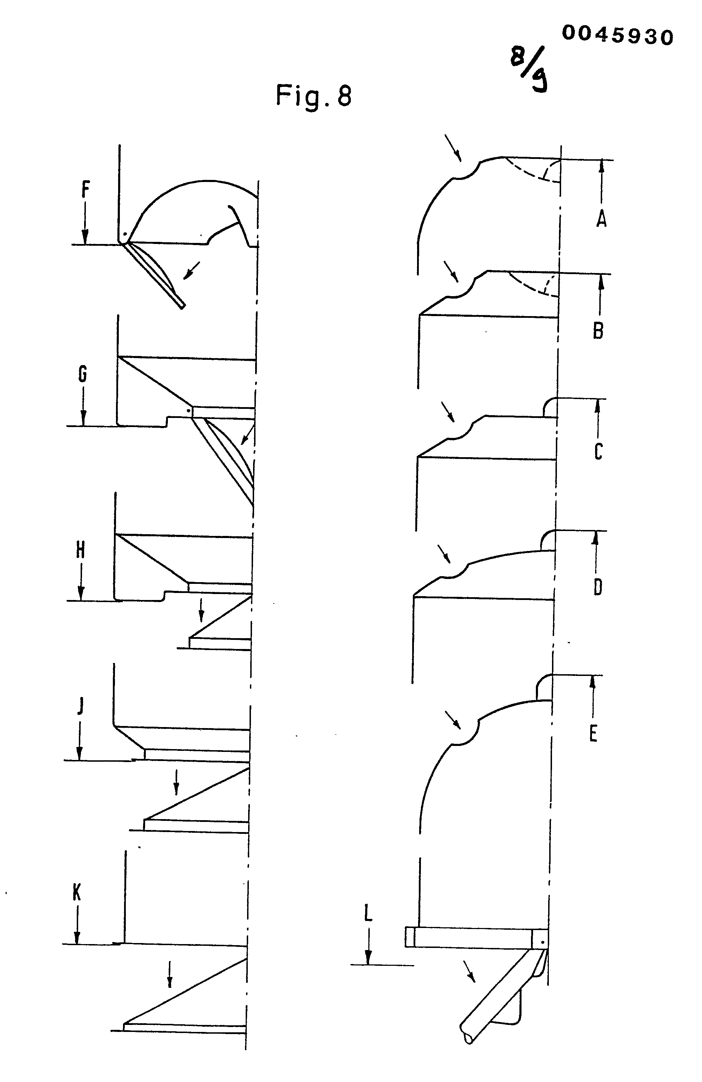

In Fig. 8 sind mit A bis E bezeichnet unterschiedliche Ausgestaltungsformen für die Kopfpartie und mit F bis L bezeichnet unterschiedliche Ausgestaltungsformen für die Bodenpartie von Sammelbehältern gezeigt. In einigen Fällen sind neue mit herkömmlichen Merkmalen kombiniert.

Die neuen Merkmale sind: der versenkte Transportbügel bei A und B; die konische Kopfpartie mit horizontal ebener Oberseite bei B und C; die als Kugelkappe ausgestaltete Kopfpartie bei D; die behälterrandseitig gelegene, sich zur Behälterachse hin öffnende und gegen den Behälterraum hin gewölbte Bodenklappe bei F und G; die vermittels des Hebe- und Zuhalteseils, 17, vertikal absenkbare Bodenklappe bei H, J und K mit ausgeprägter kegelartiger Wölbung gegen den Behälterraum hin; die vergleichsweise stark konische bzw. sich verjüngende Bodenpartie bei G und H, die einen breiten Streufluß vermeidet und das entfallende Sammelgut zur Mitte zentriert; die Anordnung von bevorzugt drei Behälterfüßen bei G und H, die dem Behälter auch auf unebenem Gelände Standfestigkeit verleihen; die Anordnung von Hohlfüßen, deren Innenvolumen Teil des Nutzvolumens ist, bei F; und die standsichere Stapelbarkeit der Behälter übereinander bei den Kombinationen A, B einerseits mit F, G, H und bedingt auch mit J, K andererseits.

Der Pfeil bei A bis E weist auf eine der Einwurföffnungen, der Pfeil bei F bis L deutet die Bewegungsrichtung der sich öffnenden Bodenklappe an.
Die Kombination EL stellt den konventionellen Kugelbehälter, Fig. 1a und 1b, dar.

Die hier nicht dargestellte Mittelpartie der neuen Behälter kann kreisförmigen, ovalen bis elliptischen, im wesentlichen quadratischen oder mehreckigen Querschnitt haben. Statt konisch, d.h. als Kegelstumpf ausgebildeter Bodenpartien, sind auch andere, das entströmende Sammelgut in gleicher Weise zentrierende Ausgestaltungen, z.B. pyramidenstumpfförmige, möglich; die Kopfpartie kann entsprechende Ausgestaltungsvarianten aufweisen.

Die Vorteilhaftigkeit der Merkmale der Erfindung sind hinsichtlich der Zusammenhänge zwischen Gesamthöhe, Kopf- und Bodenpartiegestaltung, Leer- und Nutzvolumina und Entleerungseigenschaften der Behälter in den Tabellen 1 und 2 an Berechnungsbeispielen vorgestellt.

Die Volumenberechnungen beziehen sich auf Behälter mit zylindrischer Mittelpartie und konischer Boden- und Kopfpartie. Im übrigen sind die Abbildungen A bis L in Fig. 8 im Vergleichsmaßstab gezeichnet.

Den Berechnungsergebnissen in Tab. 1 sind Behälterdurchmesser von 1,40 m und Höhen des geschlossenen Behälters einschließlich des Transportbügels von 1,55 m zugrundegelegt.

In Tab. 2 gelten Behälterdurchmesser von 1,40 m und Leervolumina von 1,30 m$^3$. Als 'Einschränkung an Ladevolumen' bei der Befüllung eines Transportfahrzeuges mit dem Sammelgut gilt das Produkt aus der Ladefläche des Fahrzeugs mit der 'Höhendifferenz'. Für die Ladefläche ist eine Fläche von 5,30 m x 2,65 m angesetzt.

Tabelle 1

| Behälterform | Leervolumen in m$^3$ | Nutzvolumen in m$^3$ | Leervolumen in % |
|---|---|---|---|
| A + F | 1,95 | 1,93 | 100,0 |
| B + G | 1,90 | 1,88 | 97,4 |
| C + H | 1,67 | 1,65 | 85,6 |
| D + J | 1,60 | 1,56 | 82,0 |
| D + K | 1,60 | 1,56 | 82,0 |
| E + L | 1,30 | 1,26 | 66,7 |

Tabelle 2

| Behälterform | Gesamthöhe geschl. in m | Zusatzhöhe bei geöffn. Bodenklappe in m | Gesamthöhe bei geöffn. Bodenklappe in m | Höhendifferenz in m | Einschränkung an Ladevol. in m$^3$ |
|---|---|---|---|---|---|
| A + F | 1,04 | 0,25 | 1,29 | 0,00 | 0,00 |
| B + G | 1,07 | 0,30 | 1,37 | 0,08 | 1,12 |
| C + H | 1,21 | 0,40 | 1,61 | 0,32 | 4,50 |
| D + J | 1,27 | 0,40 | 1,67 | 0,38 | 5,34 |
| D + K | 1,27 | 0,40 | 1,67 | 0,38 | 5,34 |
| E + L | 1,55 | 0,40 | 1,95 | 0,66 | 9,27 |

Die tabellierten Werte zeigen deutlich, daß die neuen Kopf- und Bodenpartien, insbesondere die Kombinationen A+F und B+G wesentliche Verbesserungen gegenüber dem Stand der Technik, z.B. gegenüber dem Kugelbehälter E+L, hervorbringen. Ferner erhöht sich das Ladevolumen etwa für die Kombinationen A+F und B+G noch, wenn die Behälter mittels der neuen Zuhalte- und Hebeeinrichtung (Seil 17) bei vertikal abgelassener Bodenklappe entleert werden, so daß ein randvolles Beladen des Sammelfahrzeuges möglich ist; die Ausnutzbarkeit der Ladefläche bzw. des Volumens des Fahrzeugaufbaus ist dann noch höher als in Tab. 2 angegeben.

Bei den im wesentlichen dem Stand der Technik zugehörigen Ausgestaltungen der Bodenpartien J und K, allerdings mit angelenkter innenseits ebener Bodenklappe, jedoch auch bei den Systemen H, J und K in der Ausführung und Funktion gemäß Fig. 8, werden Glasscherben beim Entleeren der Behälter weit über den Außenrand der Behälter getragen und überspringen die Bordwand des Fahrzeuges, was einerseits dessen ordnungsgemäßes Beladen stark beeinträchtigt, so daß nicht annähernd randvoll beladen werden kann, und andererseits z.B. für spielende Kinder eine Unfallgefahr heraufbeschwört, da wegen Leistungsprämien der Entsorgungsfahrer sich diese häufig nicht die Zeit nehmen, zu Boden gegangene Glasscherben zu entfernen.

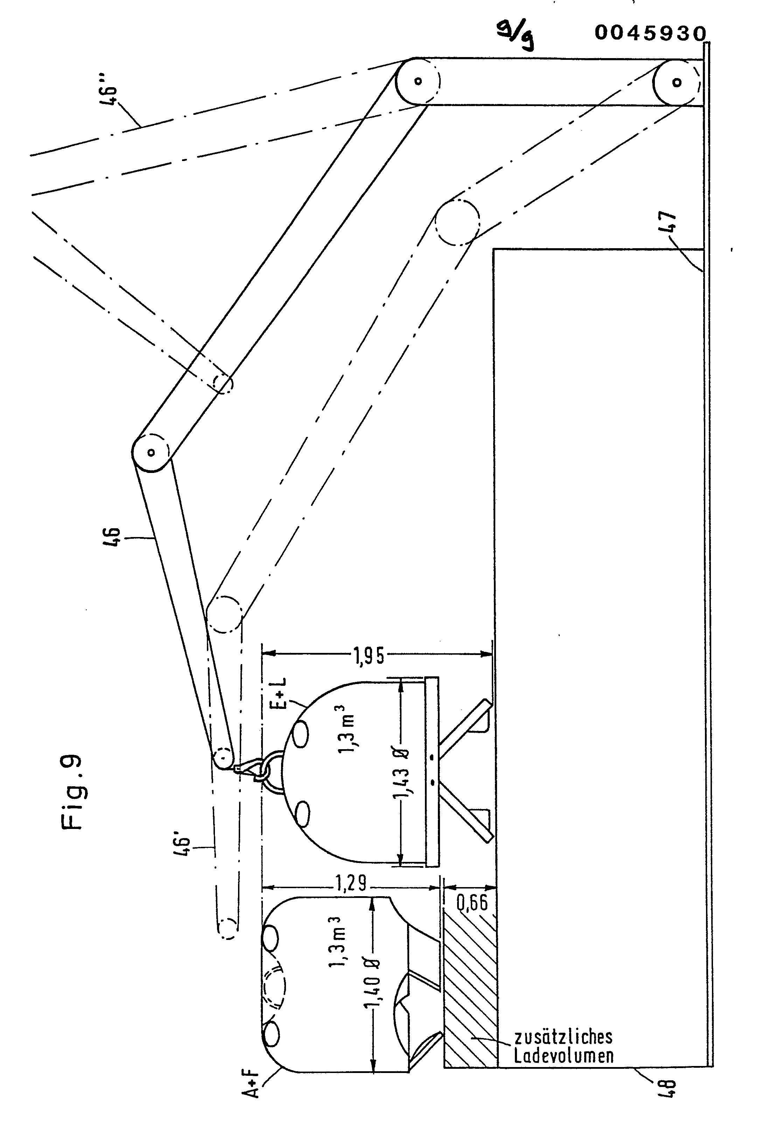

Zur Bedeutung der Spalten 'Höhendifferenz' und 'Einschränkung an Ladevolumen' in Tab. 2 wird Fig. 9 hinzugezogen.

In Fig. 9 sind mit den Bezeichnungen und Beispielsmaßen (in m) gemäß Tab. 2 mit A+F stellvertretend für einen neuen Sammelbehälter ein solcher und mit E+L der bisherige Kugelbehälter, die von einer Standard-Hydraulikhebeeinrichtung 46 über die Ladefläche 47 eines Sammelfahrzeugs mit Kastenaufbau 48 gehoben sind, dargestellt. Die Bodenklappen der Behälter enden knapp oberhalb des Kastenaufbaus. Die Hebeeinrichtung 46 ist zugleich in ihrer Transportstellung 46' und in ihrer Stellung 46" für maximalen Hub dargestellt.

Wenn ein Sammelfahrzeug mit Altglas beladen wird und sich ein Schüttberg bildet, kann dieser abgeflacht bzw. verteilt werden, indem das Fahrzeug mehrmals ruckartig vor- und zurückgesetzt wird. In Tab. 2 ist jedoch nicht dieses sondern folgendes Füllproblem angesprochen. Die Hydraulikhebeeinrichtung besitzt nur einen begrenzten Hubbereich. Für Behälter gleichen Leervolumens resultieren je nach Bauart unterschiedliche Gesamthöhen bei geöffneter Bodenklappe. Dementsprechend kann bei vorgegebenem Maximalhub der Hebeeinrichtung für die Entleerung eines Behälters mit geringerer Gesamthöhe im geöffneten Zustand der Kastenaufbau höher sein, als für die Entleerung eines Behälters mit größerer Gesamthöhe. Dementsprechend bedingt die Höhendifferenz zu vergleichender Behälter ein Mehr oder Weniger bzw. einen Gewinn oder eine Einschränkung an Ladehöhe bzw. Ladevolumen. Im Vergleich des bisherigen Kugelbehälters E+L mit dem aus diesem letztlich entwickelten besonders günstigen neuen Hohlfußbehälter A+F in den Maßen nach Tab. 2 bzw. Fig. 9 tritt eine Höhendifferenz von 0,66 m auf, entsprechend einem Gewinn an Ladevolumen bei der Leerung von Behältern A+F bzw. einer Einschränkung an Ladevolumen bei der Leerung von Behältern E+L von rund 9,3 $m^3$, wenn man von einer Ladefläche von etwa 14 $m^2$ ausgeht, wie zu Tab. 2 angesetzt.

Ein weiterer Vorteil bei der Verwendung der Behälter gemäß der Erfindung liegt darin, daß der Ladereaum des Sammelfahrzeuges, der vom Erdboden aus nicht eingesehen werden kann, wesentlich einfacher, präziser und sicherer bis zum Rand befüllt werden kann, als bei Verwendung der bisherigen Behälter, mit denen die Befüllung des Sammelfahrzeuges mehr gefühlsmäßig als gezielt erfolgen muß und viel Sorgfalt erfordert. Insgesamt erlauben die neuen Behälter ein weniger aufwendiges und randvolles Befüllen wesentlich höherer Fahrzeugaufbauten.

**0045930**

Ferner lassen sich mit den neuen Behältern je nach Bauart des Sammelfahrzeuges Mehrladevolumina von 20 bis 30 % erreichen, so daß sich bei Verwendung der Sammelbehälter gemäß der Erfindung auch die Transportkosten je Raumeinheit des Sammelgutes beträchtlich senken lassen.

Patentansprüche

1) Sammelbehälter, insbesondere für die Sammlung von Altglas, mit einer nach oben sich verjüngenden Kopfpartie mit Einwurföffnungen und einem oben mittig angeordneten Transportbügel und mit mindestens einer sich beim Absetzen des geöffneten Behälters selbsttätig schließenden Bodenklappe, dadurch gekennzeichnet, daß der Transportbügel versenkt angeordnet ist, der Behälter mit Standfüßen ausgerüstet ist und die Boden- und Kopfpartie des Behälters so aufeinander abgestimmt sind, daß eine Mehrheit von Behältern übereinander stapelbar ist.

2) Sammelbehälter nach Anspruch 1, dadurch gekennzeichnet, daß der Transportbügel in einer Mulde angeordnet ist und diese nicht überragt.

3) Sammelbehälter nach Anspruch 2, dadurch gekennzeichnet, daß die Kopfpartie kegelstumpfförmig (konisch) bzw. im wesentlichen kegelstumpfförmig gestaltet ist und die Mulde in eine diese umgebende horizontale Ringfläche übergeht, die in den nach außen abfallenden Bereich der Kopfpartie überleitet.

4) Sammelbehälter nach Anspruch 1, mit kugelkappenförmiger Kopfpartie, dadurch gekennzeichnet, daß die Kugelkappe abgeflacht ist und eine zentrale Mulde aufweist, in der der Transportbügel versenkt angeordnet ist, so daß er die Mulde nicht überragt.

5) Sammelbehälter nach einem der Ansprüche 1 bis 4, dadurch gekennzeichnet, daß die Mittelpartie des Behälters Zylinderform aufweist.

6) Sammelbehälter nach einem der Ansprüche 1 bis 4, dadurch gekennzeichnet, daß die Mittelpartie des Behälters die Form einer gleichmäßigen vierseitigen Säule mit ebenen oder leicht ausgewölbten senkrechten Flächen und mit abgerundeten Kanten aufweist.

7) Sammelbehälter nach einem der Ansprüche 1 bis 6, mit nach unten sich verjüngender Bodenpartie, dadurch gekennzeichnet, daß die Bodenpartie im wesentlichen konisch gestaltet ist und vorzugsweise drei Standfüße im maximalen Abstand voneinander, die jedoch die Mittelpartie des Behälters seitlich nicht überragen, und eine bevorzugt runde, vorzugsweise innen sich emporwölbende Bodenklappe mit mindestens einem Stützfuß außen aufweist.

8) Sammelbehälter nach Anspruch 7, dadurch gekennzeichnet, daß der Durchmesser der Bodenklappe den Halbmesser der Mittelpartie des Behälters nicht übersteigt.

9) Sammelbehälter nach einem der Ansprüche 1 bis 8, dadurch gekennzeichnet, daß die Bodenklappe ohne starre Verbindung mit dem Behälterkörper und von diesem insgesamt absenkbar angeordnet ist.

10) Sammelbehälter nach einem der Ansprüche 1 bis 6, dadurch gekennzeichnet, daß die Bodenpartie des Behälters Hohlfüße, insbesondere drei Hohlfüße aufweist bzw. aus solchen gebildet ist, deren Innenraum Teil des Gesamtinnenraums des Behälters ist, und daß jeder Hohlfuß mit einer sich gegen die Mittelachse des Behälters hin öffnenden Bodenklappe versehen ist.

11) Sammelbehälter nach Anspruch 10, unterteilt in Kammern unter mindestens einer zugehörigen Einwurföffnung, dadurch gekennzeichnet, daß jede Kammer in einen Hohlfuß übergeht.

12) Sammelbehälter nach Anspruch 10 oder 11, dadurch gekennzeichnet, daß die Bodenklappe eines jeden Hohlfußes unabhängig von den anderen Bodenklappen bedienbar ist.

13) Sammelbehälter nach einem der Ansprüche 1 bis 12, mit einem von der Innenseite der Bodenklappe durch die Kopfpartie hindurch geführten Seil als Vorrichtung zum Zuhalten der Bodenklappe beim Emporheben des Behälters, dadurch gekennzeichnet, daß das Seil die Kopfpartie in deren Zentrum durchdringend an den Transportbügel angeschlossen ist und oberhalb des Transportbügels eine Schlaufe bildet oder ausbildbar sein läßt zum Emporheben des Behälters an der Schlaufe ohne Schräglage des Behälters bei zugleich gesichertem Zuhalten der Bodenklappe.

14) Sammelbehälter nach einem der Ansprüche 1 bis 8 und 10 bis 13, gekennzeichnet durch in Verschlußlage sich selbsttätig verriegelnde Bodenklappe(n).

15) Sammelbehälter nach Anspruch 14, gekennzeichnet durch einen unter Druck stehenden behälterwandseitig angeordneten schnappschloßartig bewegbaren Bolzen und eine zugeordnete bodenklappenseitige Aussparung für die Aufnahme des Bolzens.

16) Sammelbehälter nach Anspruch 14, gekennzeichnet durch einen unter Druck stehenden bodenklappenseitig angeordneten drehriegelartig bewegbaren Bolzen und eine zugeordnete behälterwandseitige Aussparung für die Aufnahme des Bolzens.

0045930

17) Sammelbehälter nach Anspruch 15 oder 16, gekennzeichnet durch eine Hilfseinrichtung, z.B. ein Zugseil, mit Bedienungsteil an der Behälterunterseite für die Entfernung des Bolzens aus seiner Verriegelungslage.

18) Sammelbehälter nach Anspruch 17, dadurch gekennzeichnet, daß das Bedienungsseil bei abgestelltem Behälter unzugänglich und nicht bedienbar ist.

19) Sammelbehälter nach einem der Ansprüche 1 bis 18, dadurch gekennzeichnet, daß der Behälter im wesentlichen aus Kunststoff, glasfaser- oder mit anderen natürlichen oder künstlichen Fasern oder Geweben verstärktem Kunstharz oder aus Metallblech oder aus einer Kombination dieser Bau- bzw. Werkstoffe gefertigt ist.

**0045930**

1/9

Fig.1a

Fig.1b

130 Ø

143

15

130

10

# Fig. 2a

# Fig. 2b

# Fig. 2c

| A | B | C | | | | | | |
|---|---|---|---|---|---|---|---|---|
| 1,48 m | 1,40 m | 1,55 m | = | 1,90 m³ | Ges. Vol. | = | 1,88 m³ | Nutzvol. |
| 1,48 m | 1,30 m | 1,55 m | = | 1,66 m³ | Ges. Vol. | = | 1,64 m³ | Nutzvol. |
| 1,33 m | 1,40 m | 1,40 m | = | 1,67 m³ | Ges. Vol. | = | 1,65 m³ | Nutzvol. |
| 1,23 m | 1,30 m | 1,30 m | = | 1,33 m³ | Ges. Vol. | = | 1,31 m³ | Nutzvol. |

## Fig. 3a

## Fig. 3b

## Fig. 3c

| A | B | C | | | | |
|---|---|---|---|---|---|---|
| 1,48 m | 1,40 m | 1,55 m | = | 1,97 m³ Ges. Vol. | = | 1,95 m³ Nutzvol. |
| 1,48 m | 1,30 m | 1,55 m | = | 1,74 m³ Ges. Vol. | = | 1,72 m³ Nutzvol. |
| 1,33 m | 1,40 m | 1,40 m | = | 1,76 m³ Ges. Vol. | = | 1,74 m³ Nutzvol. |
| 1,23 m | 1,30 m | 1,30 m | = | 1,44 m³ Ges. Vol. | = | 1,42 m³ Nutzvol. |

4/9

Fig.4

Fig.5b
(A-B)

5/9

Fig.5a
(C-D)

0045930

6/9

Fig.6a
(B-C)

Fig.6b
(A)

Fig.7a

Fig.7b

43

42

A

B

44'  42  43  44''

Fig.7c

Fig.7d
(A-B)

44

44'

44''

43

Fig. 8

# Fig. 9

A+F

1,3 m³

1,40 ∅

1,29

E+L

1,3 m³

1,43 ∅

1,95

0,66

zusätzliches Ladevolumen

46

46'

46''

48

47

9/9

0045930